# EUROPÄISCHE PATENTSCHRIFT

(11) **EP 1 019 628 B1**
(45) Veröffentlichungstag und Bekanntmachung des Hinweises auf die Patenterteilung: **27.11.2002**
(21) Anmeldenummer: 98958177.2
(22) Anmeldetag: 29.09.1998
(51) Int. Cl.: F02M 51/06, F02M 59/46, F16K 31/10, F16H 21/44, F02M 47/02

(54) **VORRICHTUNG ZUM ÜBERTRAGEN EINER AUSLENKUNG, EINSPRITZVENTIL MIT EINER SOLCHEN VORRICHTUNG UND VERFAHREN ZUM HERSTELLEN EINES ÜBERTRAGUNGSELEMENTES**
DEVICE FOR TRANSMITTING DISPLACEMENT, INJECTION VALVE HAVING SUCH A DEVICE AND METHOD FOR THE PRODUCTION OF A TRANSMISSION ELEMENT
DISPOSITIF POUR TRANSMETTRE UN DEPLACEMENT, INJECTEUR COMPORTANT UN TEL DISPOSITIF ET PROCEDE DE PRODUCTION D'UN TEL ELEMENT DE TRANSMISSION

(30) Priorität: 29.09.1997 DE 19742968
(43) Veröffentlichungstag der Anmeldung: 19.07.2000
(73) Patentinhaber: SIEMENS AKTIENGESELLSCHAFT, 80333 München (DE)
(72) Erfinder: FRANK, Wilhelm, D-96049 Bamberg (DE); LEWENTZ, Günter, D-93055 Regensburg (DE); LIXL, Heinz, D-93055 Burgweinting (DE)
(86) Internationale Anmeldenummer: DE9802887
(87) Internationale Veröffentlichungsnummer: WO99017014

(56) Entgegenhaltungen:
- EP-A- 0 295 770
- EP-A- 0 790 402
- US-A- 4 101 076

## Beschreibung

Die Erfindung betrifft eine Vorrichtung zum Übertragen der Auslenkung eines Aktors gemäß dem Oberbegriff des Patentanspruchs 1 und ein Einspritzventil mit einer solchen Vorrichtung gemäß Patentanspruch 9.

Aus US 4,101,076 ist ein Einspritzventil bekannt, das einen piezoelektrischen Aktor aufweist, der über ein mechanisches Übertragungselement direkt eine Einspritznadel steuert. Das Übertragungselement weist zwei unterschiedlich lange Hebelarme auf, die im rechten Winkel zueinander angeordnet sind und in einem Auflagebereich miteinander verbunden sind. Der kürzere Hebelarm ist dem piezoelektrischen Aktor und der längere Hebelarm der Einspritznadel zugeordnet. Das Übertragungselement liegt im Auflagebereich am Gehäuse des Einspritzventiles auf. Die Auslenkung des piezoelektrischen Aktors wird durch die unterschiedlichen Längen der zwei Hebelarme in eine größere Auslenkung der Einspritznadel umgesetzt.

Aus der EP 0 295 770 A1 ist eine Bremsvorrichtung bekannt, um ein Reibelement gegen ein zu bremsendes Element zu drücken zur Erzeugung einer Bremskraft, wobei die Deformation von Piezoelementen verwendet wird, um die Bremskraft zu erzeugen. Die Deformation bzw. Auslenkung der Piezoelemente wird dabei mittels eines Übertragungselements übertragen. Das Übertragungselement weist einen ersten, zweiten und einen dritten Auflagebereich auf zum Übertragen der Auslenkung des Aktors (Piezoelemente). Das Übertragungselement ist plattenförmig und v-förmig ausgebildet und parallel zur Übertragungsrichtung angeordnet.

Die Form des Übertragungselementes bietet nur eine mäßige Steifigkeit, die insbesondere bei hochdynamischen Schaltungsvorgängen zu einer Ungenauigkeit der Übertragung der Auslenkung führt.

Die Aufgabe der Erfindung beruht darin, eine Vorrichtung zum Übertragen einer Auslenkung eines Aktors bereit zu stellen, die einfach aufgebaut ist und kostengünstig zu fertigen ist.

Die Aufgabe der Erfindung wird durch die Merkmale des Anspruchs 1,2,9 und 11 gelöst. Ein wesentlicher Vorteil der Erfindung liegt in der Form des Übertragungselementes, die eine hohe Steifigkeit gewährleistet, so daß eine direkte Übertragung der Auslenkung auch bei hoch dynamischen Vorgängen gewährleistet ist. Zudem gewährt das Verfahren nach Anspruch 8 eine hohe Genauigkeit bei der Herstellung identischer Übertragungselemente.

Weitere vorteilhafte Ausbildungen der Erfindung sind in den Unteransprüchen angegeben.

Die Erfindung wird im folgenden anhand der Figuren näher erläutert; es zeigen:
- Figur 1: ein Einspritzventil mit zwei Übertragungselementen,
- Figur 2: eine schematische Sicht von oben auf die Übertragungselemente mit einer Führungsplatte,
- Figur 3: ein Einspritzventil mit einem Übertragungselement,
- Figur 4: eine erste Form des Übertragungselementes,
- Figur 5: eine zweite Form des Übertragungselementes,
- Figur 6: eine dritte Form des Übertragungselementes,
- Figur 7: eine vierte Form des Übertragungselementes,
- Figur 8: ein weiteres Einspritzventil,
- Figur 9: eine fünfte Form des Übertragungslementes, und
- Figur 10: ein Übertragungselement im Querschnitt.

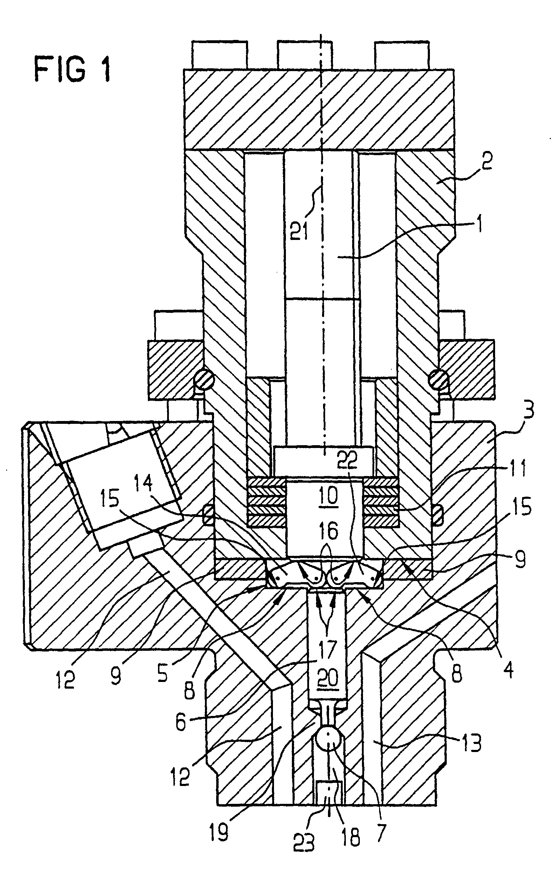

Figur 1 zeigt schematisch einen Teil eines Einspritzventils mit einem Aktor 1, der in diesem Ausführungsbeispiel als piezoelektrischer Aktor ausgebildet ist. Der Aktor 1 ist in einem Gehäuse 2 eingebracht und durch Spannfedern 11 gegen eine Auslenkung vorgespannt, wobei die Spannfedern 11 gegen das Gehäuse 2 abgestützt sind. Mit einem Ende ist der Aktor 1 gegen eine Abschlußplatte des Gehäuses 2 abgestützt. Das zweite Ende des Aktors 1 liegt an einem Aktorkolben 10 an, der zylinderförmig ausgebildet ist und in einer zylinderförmigen Ausnehmung des Gehäuses 2 geführt ist.

Das Gehäuse 2 ist in eine Aufnahmeöffnung 4 eines Ventilgehäuses 3 eingeschoben und über Befestigungsmittel fest mit dem Ventilgehäuse 3 verschraubt. In der Aufnahmeöffnung 4 ist eine Abstandscheibe 9 angeordnet, auf der das Gehäuse 2 aufliegt. Die Aufnahmeöffnung 4 weist eine mittige, kreisförmige Vertiefung 5 auf, die in eine Bohrung 20 übergeht, die zu einem Ventilsitz 19 und einer Steuerkammer 18 geführt ist. In der Bohrung 20 ist ein Stellglied 6 in Form eines Kolbens ausgebildet, der mit einer Spitze zum Ventilsitz 19 geführt ist. Am Ventilsitz 19 liegt ein Ventilglied 7 an, das die Steuerkammer 18 gegen die Bohrung 20 abdichtet.

Zwischen dem Aktorkolben 10 und dem Stellglied 6 sind zwei mechanische Übertragungselemente 14,22 angeordnet. Die zwei Übertragungselemente 14,22 sind symmetrisch und gegenüberliegend zur Mittenachse 21 angeordnet. Die Übertragungselemente 14,21 sind identisch ausgebildet und in der Vertiefung 5 eingebracht. Die Vertiefung 5 weist eine ringförmige Auflagefläche 8 auf, die vom Ventilgehäuse 3 gebildet ist, und die im wesentlichen senkrecht zur Bewegungsrichtung des Stellgliedes 6 und parallel zur Druckfläche des Aktorkolbens 10 angeordnet ist. Der Aktorkolben 10 und das Stellglied 6 sind symmetrisch zueinander und mittig zur Mittenachse 21 angeordnet.

Die Übertragungselemente 14,22 liegen jeweils mit einem ersten Auflagebereich 15 auf der Auflagefläche 8 auf. Zudem liegt jedes Übertragungselement 14,22 mit einem dritten Auflagebereich 17 auf der Oberseite des Stellgliedes 6 auf. Außerdem liegt jedes Übertragungselement 14 mit einem zweiten Auflagebereich 16 am Aktorkolben 10 an. Der zweite Auflagebereich 16 liegt zwischen dem ersten und dem zweiten Auflagebereich 17, wobei der erste und der dritte Auflagebereich 15, 17 auf der Unterseite und der zweite Auflagebereich 16 auf der Oberseite des Übertragungselementes 14 angeordnet ist.

Die Übertragungselemente 14,22 sind in ihrer Position senkrecht zur Bewegungsrichtung des Aktors 10 und des Stellgliedes 6 zum einen durch die Vertiefung 5 und zum anderen durch die Abstandscheibe 9 festgelegt. Die Abstandscheibe 9 weist eine durchgehende Ausnehmung auf, in der die Übertragungselemente 14,22 eingebracht sind. Auf diese Weise wird erreicht, daß das erste und das zweite Übertragungselement 14, 22 symmetrisch zueinander und symmetrisch zur Mittenachse 21 und symmetrisch zum Aktorkolben 10 und zum Stellglied 6 angeordnet sind.

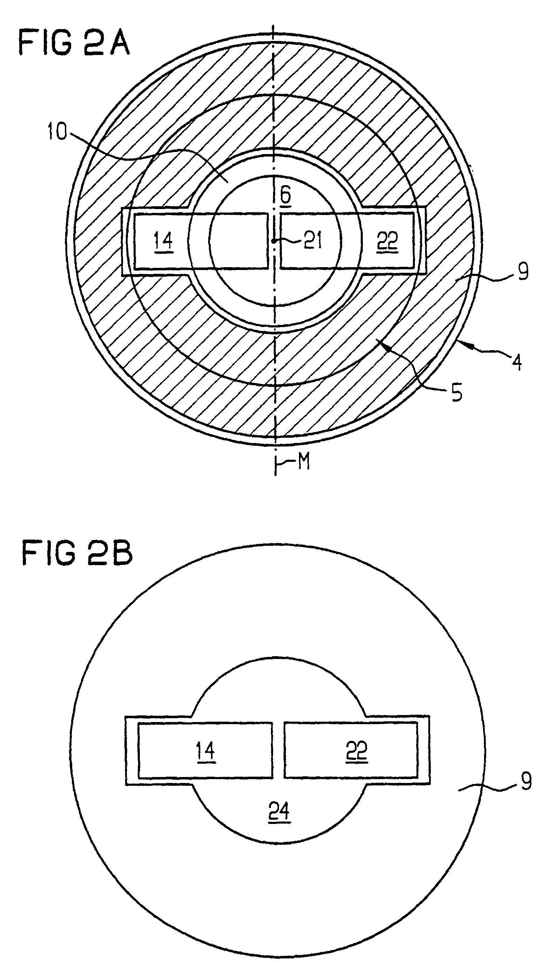

Figur 2a zeigt schematisch von oben die Anordnung des Aktorkolbens 10 in Bezug auf das erste und das zweite Übertragungselement 14, 22 und das Stellglied 6. Der Aktorkolben 10 weist einen größeren Durchmesser als das Stellglied 6 auf. Zudem ist die kreisförmige Aufnahmeöffnung 4 und die mittig und symmetrisch zur Aufnahmeöffnung 4 eingebrachte Vertiefung 5 dargestellt. Die Vertiefung 5 ist ebenfalls kreisförmig ausgebildet. In der Vertiefung 5 sind das erste und das zweite Übertragungselement 14, 22 symmetrisch zu einer Symmetrieachse M angeordnet, die durch die Mittenachse 21 führt.

In Figur 2a ist schraffiert die Abstandscheibe 9 eingezeichnet, die kreisförmig ausgebildet ist und deren Außenumfang im wesentlichen der Aufnahmeöffnung 4 entspricht.
Die Abstandscheibe 9 ist in Figur 2b noch einmal deutlicher erkennbar dargestellt. Die Führungsscheibe 9 weist eine Justierausnehmung 24 auf, die im wesentlichen einem Rechteck mit einem mittig überlagerten Kreis entspricht. Die Rechteckform dient dazu, das erste und das zweite Übertragungselement 14, 22 auf einer Achse und symmetrisch zueinander zu justieren. Die mittige, kreisförmige Ausnehmung ist notwendig, damit der kreisförmige Aktorkolben 10 sich ungehindert in Richtung auf das erste und das zweite Übertragungselement bewegen kann. Deshalb ist der kreisförmige Teil der Justierausnehmung der Abstandscheibe 9 mindestens so groß wie der Querschnitt des Aktorkolbens 10.

Die Anordnung nach Figur 1 funktioniert folgendermaßen:

Bei einer Ansteuerung des piezoelektrischen Aktors 1 dehnt sich der Aktor 1 gegen die Federkraft der Spannfedern 11 in Richtung auf das Stellglied 6 aus. Dabei drückt der Aktorkolben 10 auf den zweiten Auflagebereich 2 des ersten und des zweiten Übertragungselementes 14, 22. Das erste und das zweite Übertragungselement 14, 22 liegen jeweils mit einem ersten Auflagebereich 15 auf der Auflagefläche 8, die durch das Ventilgehäuse 3 gebildet ist. Zudem liegen das erste und das zweite Übertragungselement 14, 22 mit einem dritten Auflagebereich 17 jeweils auf dem Stellglied 6 auf. Das Stellglied 6 ist beweglich in der Bohrung 20 gelagert. Der Druck des Aktorkolbens 10 bewirkt, daß sich das erste und das zweite Übertragungselement 14, 22 mit dem ersten Auflagebereich 15 am Ventilgehäuse 3 abstützen und sich in eine Arbeitsposition bewegen, in der durch die dritten Auflagebereiche 17 das Stellglied 6 in Richtung auf das Ventilglied 7 verschoben wird.

Auf diese Weise wird das Stellglied 7 vom zugeordneten Ventilsitz 19 abgehoben und die Steuerkammer 18 wird geöffnet, so daß beispielsweise Kraftstoff, der in der Steuerkammer 18 unter einem hohen Druck vorliegt, über die Bohrung 20 zu einem Abfluß abfließen kann. Gleichzeitig fließt über eine erste Drossel und einen Zulaufkanal 12 Kraftstoff mit hohem Druck in die Steuerkammer 18 zu. Bei geöffnetem Ventilsitz 19 fließt jedoch mehr Kraftstoff ab, als über die Drossel zufließt. Damit sinkt der Druck in der Steuerkammer. In der Steuerkammer 18 ist weiterhin ein Stellkolben 23 vorgesehen, der den Druck der Steuerkammer 18 auf eine Ventilnadel überträgt. Die Ventilnadel ist einer Einspritzdüse zugeordnet und öffnet oder schließt abhängig vom Druck in der Steuerkammer die Einspritzdüse, über die Kraftstoff in eine Brennkraftmaschine gespritzt wird. Dazu ist die Einspritzdüse zudem an einen Zulaufkanal 12 angeschlossen, der Kraftstoff unter hohem Druck führt.

Wird nun die Ansteuerung des Aktors 1 abgeschaltet, so verkürzt sich der Aktor 1 und wird von den Spannfedern 11 und von dem ersten und dem zweiten Übertragungselement 14, 22 nach oben in Richtung Anschlußplatte des Gehäuses 2 in seine Ausgangslage geschoben. Der Druck in der Steuerkammer 18 drückt das Ventilglied 7, das beispielsweise als Kugel ausgebildet ist, auf den Ventilsitz 19 und gleichzeitig das Stellglied 6 in Richtung auf das erste und das zweite Übertragungselement 14, 22. Dadurch werden das erste und das zweite Übertragungselement 14, 22 in die Ausgangsposition zurückbewegt.

Die Drehung des ersten und des zweiten Übertragungselementes 14, 22 erfolgt über einen Drehpunkt, der jeweils über dem ersten Auflagebereich 15 im ersten bzw. im zweiten Übertragungselement 14, 22 angeordnet ist. Da der zweite Auflagebereich 16, auf dem der Aktorkolben 10 auf dem ersten bzw. auf dem zweiten Übertragungselement aufliegt, einen kürzeren Abstand als der dritte Auflagebereich 17 zum Drehpunkt aufweist, wird die Auslenkung des Aktors in eine vergrößerte Auslenkung des Stellgliedes 6 umgesetzt.

Eine besonders präzise und leichtgängige Steuerung des Stellgliedes 6 wird dadurch erreicht, daß das erste und das zweite Übertragungselement 14, 22 durch die Abstandscheibe 9 präzises zueinander, zum Aktorkolben 10 und zum Stellglied 6 justiert sind. Vorzugsweise wird über eine entsprechende Wahl der Dicke der Führungsscheibe 9 auch eine Einstellung des Abstandes zwischen dem Aktorkolben 10 und dem ersten und dem zweiten Übertragungselement 14, 22 und damit auch eine Einstellung des Abstandes zwischen dem Aktorkolben 10 und dem Stellglied 6 erreicht. Die präzise Justage des ersten und des zweiten Übertragungselementes 14, 22, die zugleich die Bewegung des Aktorkolbens 10 nicht behindert, wird im wesentlichen durch die Justierausnehmung 24 erreicht, die in die Abstandscheibe 9 eingebracht ist. Wesentlich ist dabei die besondere Form der Justierausnehmung, die aus einem Rechteck mit einem mittig überlagerten Kreis gebildet ist. In einer einfachen Ausbildung der Führungsscheibe 9 ist die Justierausnehmung nur als viereckige Ausnehmung ausgebildet

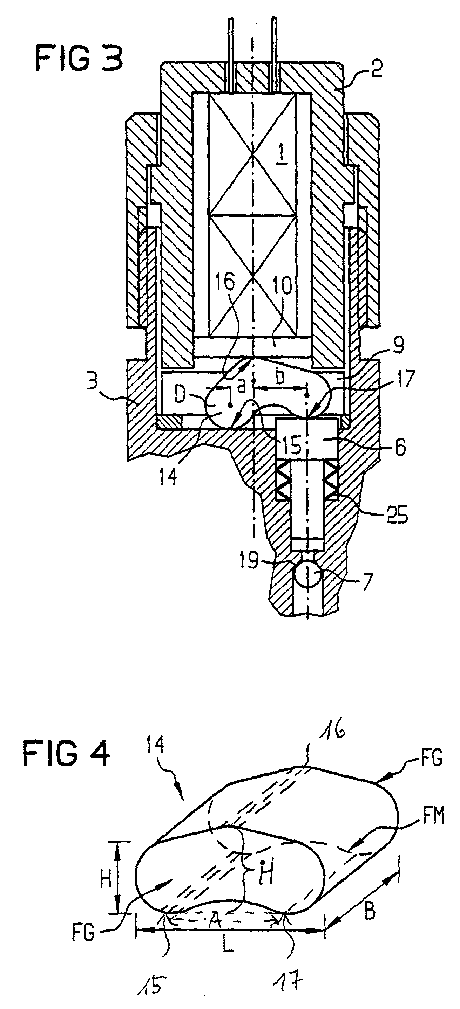

Figur 3 zeigt eine weitere Ausführungsform eines Einspritzventiles, bei dem zur Übertragung der Auslenkung des Aktors 1 nur ein einziges Übertragungselement 14 vorgesehen ist. Das Übertragungselement 14 liegt dabei mit dem ersten Auflagebereich 15 auf der Auflagefläche 8 des Ventilgehäuses 3 auf und wird von der Führungsscheibe 9 geführt. Der zweite Auflagebereich 16 liegt am Aktorkolben 10 an. Der dritte Auflagebereich 17 des Übertragungselementes 14 liegt mittig am Stellglied 6 auf. Die Anordnung nach Figur 3 funktioniert entsprechend der Anordnung nach Figur 1, wobei die Auslenkung des Aktors 1 nur über ein einziges Übertragungselement 14 auf das Stellglied 6 übertragen wird.

In Figur 3 ist der Drehpunkt D des Übertragungselementes 14 eingezeichnet. Der Drehpunkt D liegt senkrecht über dem ersten Auflagebereich 15. Der zweite Auflagebereich 16 weist einen ersten effektiven Abstand a zum Drehpunkt D auf. Mit effektiver Abstand ist der Abstand gemeint, der für eine Hebelwirkung von Bedeutung ist. Der dritte Auflagebereich 17 ist um einen zweiten effektiven Abstand b vom Drehpunkt D entfernt. Die Übersetzung der Aktorauslenkung wird durch das Verhältnis des ersten effektiven Abstandes a zum zweiten effektiven Abstand b festgelegt. Das Übersetzungsverhältnis Ü ist definiert durch Ü = a/b. Durch die Form des Übertragungselementes wird der erste und der zweite effektive Abstand a,b und damit das Übersetzungsverhältnis festgelegt.

Anstelle der Anordnung mit einem Übertragungselement nach Figur 3 oder der Anordnung mit zwei Übertragungselementen nach Figur 1 können auch mehrere Übertragungselemente verwendet werden. Für eine reibungsarme Ansteuerung des Stellgliedes 6 ist es jedoch notwendig, daß die Kraft des Aktorkolbens 10 mittig oder gleichmäßig verteilt auf das Stellglied 6 übertragen wird, damit kein Drehmoment im Stellglied 6 erzeugt wird. Dazu ist es notwendig, die Übertragungselemente 14, 22 symmetrisch zur Mittenachse 21, die mittig durch das Stellglied 6 läuft, auszurichten.

Figur 4 zeigt in einer Perspektive ein Übertragungselement 14. Das Übertragungselement 14 weist im wesentlichen die Form eines Zylinders auf, dessen Mantelfläche FM senkrecht zu den Begrenzungsflächen FG angeordnet ist. Die Begrenzungsflächen FG sind identisch ausgebildet. Die Begrenzungsfläche FG weist dabei vorteilhafterweise eine Dreiecksform auf, wobei die Ekken abgerundet sind.

Wesentlich bei der Form des Übertragungselementes 14 ist, daß die Breite B nahezu genauso groß ist, wie die Länge L des Übertragungselementes. Durch die relativ große Breite B werden für den ersten, den zweiten und den dritten Auflagebereich 15, 16, 17 längliche Auflageflächen erreicht, die schmal, aber dafür relativ lang sind. Dadurch werden relativ große Auflageflächen für den ersten, den zweiten und den dritten Auflagebereich 15, 16, 17 erreicht. Damit wird eine punktuelle Druckbelastung vermieden und eine flächige Druckbelastung am Aktorkolben 10, auf der Auflagefläche 8, auf dem Stellglied 6 und auf dem Übertragungselement 14,22 erreicht.

Die Breite der Auflagefläche 15, 16, 17 wird im wesentlichen durch die Krümmung des Übertragungselementes 14,22 in den entsprechenden Bereichen festgelegt. Die Form der Auflagebereiche 15,16,17 ist so zu wählen, daß einerseits das Übersetzungsverhältnis gegeben ist, und andererseits der Verschleiß durch Reibung oder Kaltverfestigung durch eine zu hohe Flächenpressung ein Minimum darstellt. Die Krümmung sollte im Bereich der Auflageflächen 15,16,17 so klein wie möglich sein. Zudem sollte das Übertragungselement 14 so hoch wie möglich und so breit wie möglich sein, damit eine möglichst hohe Steifigkeit erreicht wird. Wesentlich ist dabei das Verhältnis der Höhe H, der Länge L und der Breite B des Übertragungselementes 14 zueinander, die so zu wählen sind, daß bei gegebener Übersetzung eine ausreichende Steifigkeit gegeben ist.

Das Übertragungselement 14 ist auf der Unterseite zwischen dem ersten und dem dritten Auflagebereich 15, 17 etwas nach Innen gewölbt, damit das Übertragungselement 14 nur im ersten und im dritten Auflagebereich 15,17 definiert auf der Auflagefläche 8 und dem Aktorkolben 6 aufliegt und zudem eine Drehung des Übertragungselementes 14 um den Drehpunkt D möglich ist, ohne daß das Übertragungselement 14 in einem anderen Bereich am Ventilgehäuse 3 anstößt.

In Figur 4 sind zudem der erste, der zweite und der dritte Auflagebereich 15, 16, 17 als gestrichelte Linie dargestellt. Die Auflagebereiche 15, 16, 17 sind im wesentlichen in Form einer Linienkontaktierung ausgebildet, mit der der erste, der zweite und der dritte Auflagebereich 15, 16, 17 auf dem Aktorkolben 10, auf dem Stellglied 6 bzw. auf der Auflagefläche 8 aufliegen. Der Abstand zwischen dem ersten und dem dritten Auflagebereich 15, 17 ist als Hebelbreite A bezeichnet. Liegen der erste und der dritte Auflagebereich 15, 17 auf einer ebenen Platte auf, so wird die Hebelhöhe H durch den Abstand des zweiten Auflagebereichs 16 von der ebenen Platte definiert. Versuche haben ergeben, daß eine ausreichende Steifigkeit des Übertragungselementes 14 bei zugleich geringer Reibbewegung des Hebels an den Kontaktstellen erreicht wird, wenn das Verhältnis der Hebelhöhe H zur Hebelbreite A H/A kleiner gleich 1 ist. Ein bevorzugtes Verhältnis der Hebelhöhe zur Hebelbreite H/A liegt im Bereich zwischen 1/4 bis zu 3/4,5. Mit diesen Abmessungen wird zum einen eine ausreichende Steifigkeit erreicht und zugleich die Relativbewegung des Übertragungselementes 14 beim Auslenken des piezoelektrischen Aktors auf ein notwendiges Mindestmaß reduziert. Zudem haben Versuche ergeben, daß das Übertragungselement 14 vorzugsweise eine Hebelbreite B von 2 bis 13 mm hat.

Die Belastung des Übertragungselementes 14 wird zudem dadurch reduziert, daß der erste, der zweite und der dritte Auflagebereich 15, 16, 17, die im wesentlichen Auflagelinien darstellen, möglichst parallel zueinander angeordnet sind. Eine bevorzugte, maximale Abweichung in der Parallelität der ersten, zweiten und dritten Auflagelinie zwischen zwei Auflagelinien liegt im Bereich von 50 µm bei einer bevorzugten Hebelbreite von bis zu 6 mm. Der Abrieb des Übertragungselementes 14 wird in besonderer Weise reduziert, wenn der erste, der zweite und der dritte Auflagebereich 15, 16, 17, die als Auflagelinien ausgebildet sind, eine Abweichung W der Parallelität zwischen zwei Auflagelinien aufweisen, die geringer als 10 µm bezogen auf die Hebelbreite von 6 mm ist. Dies ist schematisch in Figur 4a dargestellt.

Zur Reduzierung der Reibung, die am Übertragungselement 14 auftritt, ist es vorteilhaft, daß die Oberflächen des Übertragungselementes 14, insbesondere im Bereich des ersten, des zweiten und des dritten Auflagebereiches 15, 16, 17 eine hohe Oberflächengüte aufweisen, deren R_{Z}-Wert vorzugsweise kleiner als 1 µm ist. Mit R_{Z} ist die Rauhtiefe nach der DIN-Norm 4768 bezeichnet,Zudem wird mit einem Härtewert von größer 60 HRC (Härte nach Rockwell) ein Übertragungselement 14 ermöglicht, das den hohen Belastungen standhält.

Die Reibungskräfte, die am Übertragungselement 14 angreifen, werden zudem durch eine Schmierung, beispielsweise über den Betrieb im Kraftstoffleckstrom des Injektors, reduziert.

Eine weitere vorteilhafte Ausführungsform des Übertragungselementes 14 besteht darin, mindestens den ersten, den zweiten und den dritten Auflagebereich 15, 16, 17 mit einer Oberflächenbeschichtung zu versehen, die die Reibung bei der Bewegung des Übertragungselementes 14 reduziert und zudem die hohen Anforderungen an die Oberflächenqualität und die geforderte Härte erfüllt. Vorzugsweise wird als Beschichtung eine Titan-Nitrit-Schicht verwendet. Das Übertragungselement 14 ist vorzugsweise aus einem sehr steifen Material gebildet, dessen Elastizitätsmodul deutlich über dem von Stahl liegt und beispielsweise größer als 500 000 N/mm² ist.

Weiterhin haben Versuche gezeigt, daß vorteilhafterweise die Rundungsradien des ersten, des zweiten und des dritten Auflagebereiches 15, 16, 17 im Bereich von 5 bis 30 mm liegen. Dabei hat sich gezeigt, daß es von Vorteil ist, daß das Verhältnis zwischen dem Rundungsradius R1, R2 und der Auflagekraft, mit der der erste, der zweite und der dritte Auflagebereich 15, 16, 17 auf einer Kontaktstelle aufliegen, vorzugsweise folgende Relation aufweist: Rundungsradius/Kontaktkraft ≥ 7,5 mm/1000 Newton. Bei Einhaltung dieses Verhältnisses wird der Verschleiß am Übertragungselement 14 in vorteilhafter Weise reduziert.

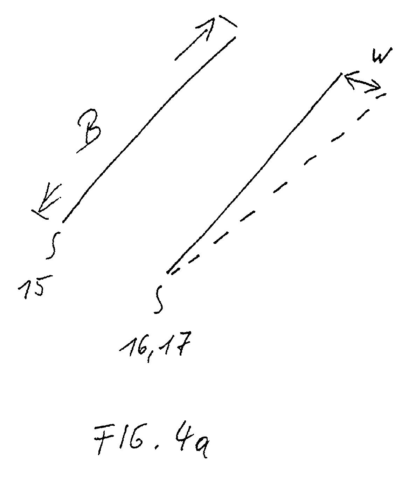

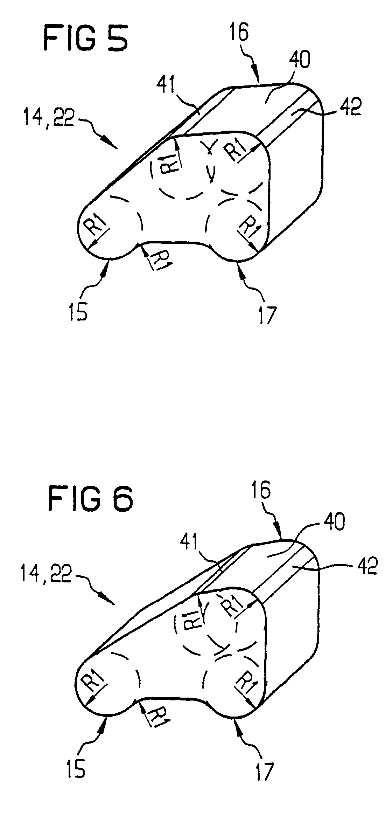

Die vorgenannten Dimensionen des Übertragungselementes 14 sind nicht auf die in Figur 4 konkret dargestellte Ausführungsform beschränkt, sondern auch bei anderen Formen wie z.B. denen in Figur 5 und Figur 6 dargestellten Ausführungsformen von Vorteil.

Besonders vorteilhaft ist die Verwendung nur eines Übertragungselements 14 entsprechend Figur 3, da dadurch die Herstellungskosten gesenkt werden und der notwendige Bauraum reduziert wird.

Figur 5 zeigt eine vorteilhafte Ausführungsform des Übertragungselementes 14. Die wesentliche Form des Übertragungselementes 14 ist die Zylinderform, dessen Begrenzungsflächen weitgehend einem Dreieck mit abgerundeten Ecken entsprechen. Zudem ist das Übertragungselement 14 senkrecht zur Drehrichtung möglichst breit ausgebildet, d.h. der Zylinder ist relativ lang in bezug auf die Größe der Begrenzungsflächen. Dadurch wird die Steifigkeit des Übertragungselementes 14 erhöht. Der erste, der zweite und der dritte Auflagebereich sind jeweils mit einer Krümmung mit einem vorgegebenen Radius ausgebildet. Dabei stellen diese Bereiche im wesentlichen die Form einer Zylinderoberfläche dar. Der Krümmungsradius ist vorzugsweise in dem ersten, dem zweiten und dem dritten Auflagebereich 15, 16, 17 identisch.

Das Übertragungselement der Figur 5 weist eine obere vorzugsweise plane Übertragungsfläche 40 auf, die sich von einem ersten Rundungsbereich 41 bis zu einem zweiten Rundungsbereich 42 erstreckt. Der erste und der zweite Rundungsbereich 41,42 sind in Längsrichtung zur Zylinderform des Übertragugnselementes angeordnet. Der zweite Rundungsbereich 42 ist über der dritten Auflagefläche 17 angeordnet. Der erste Rundungsbereich 41 ist zwischen der ersten und der zweiten Auflagefläche 17 angeordnet. Die Übertragungsfläche 40 ist in Richtung zum zweiten Rundungsbereich 42 nach oben geneigt, d.h. steigend ausgebildet. Die Übertragungsfläche 40 geht an den beiden Rundungsbereichen 40,41 in eine Krümmung mit dem Radius R1 über. Die Funktion der geneigten Übertragungsfläche 40 beruht darin, daß der Aktorkolben 10 in der Ruheposition am zweiten Rundungsbereich 42 aufliegt, der höher als der erste Rundungsbereich 41 ist. Damit istder zweite Auflagebereich 16 auf dem zweiten Rundungsbereich 42 angeordnet. Der dritte Auflagebereich 17 ist unter dem zweiten Auflagebereich 16 angeordnet, wobei der dritte und der zweite Auflagebereich den gleichen seitlichen Abstand zum ersten Auflagebereich 15 aufweisen. Wird nun der Aktorkolben 10 ausgelenkt, so wird die Auslenkung direkt, d.h. ohne Übersetzung, über den dritten Auflagebereich 17 auf das zugeordnete Stellglied 6 übertragen.

Wird nun der Aktorkolben 10 weiter ausgelenkt, so verschiebt sich der zweite Auflagebereich 16 auf der Übertragungsfläche 40 in Richtung auf den ersten Rundungsbereich 41. Dadurch werden die seitlichen Abstände, die der zweite und der dritte Auflagebereich 16,17 vom ersten Auflagebereich 15 haben, unterschiedlich groß, wobei der Abstand des zweiten Auflagebereich 16 kleiner wird und der Abstand des dritten Auflagebereich 17 konstant bleibt. Dadurch wird die Auslenkung des Aktorkolbens 10 in eine größere Auslenkung des Stellgliedes 6 umgesetzt. Das Übersetzungsverhältnis zwischen der Auslenkung des Aktorkolbens 10 und der Auslenkung des Stellgliedes 6 nimmt mit zunehmender Auslenkung des Aktorkolbens 10 zu. Besonders vorteilhaft ist dabei, daß bei Beginn der Auslenkung des Aktorkolbens 10 das Übersetzungsverhältnis Eins ist und anschließend das Übersetzungsverhältnis zunimmt.

Durch die Steigung der Übertragungsfläche 40 wird das Verhältnis zwischen der Auslenkung des Aktors 1 und der Auslenkung des Stellglieds 6 festgelegt.

Dadurch wird zuerst das Ventilglied 7 gegen den Druck in der Steuerkammer 18 vom Ventilsitz 19 mit großer Kraft und kleiner Übersetzung abgehoben. Für diesen Vorgang ist eine große Kraftübertragung notwendig. Dies wird mit dem Übersetzungsverhältnis von Eins erreicht. Wenn das Ventilglied 7 vom Ventilsitz abgehoben ist, sinkt der Druck in der Steuerkammer 18. Bei niedrigem Druck ist die Kraft, die zum weiteren Öffnen des Abflusses notwendig ist, geringer und ein schnelles Öffnen des Abflusses erhöht die Dynamik des Servoventils, so daß eine Übersetzung der Auslenkung des Aktorkolbens in diesem Fall von Vorteil ist. Durch die variable Übersetzung der Auslenkung kann der Aktor 1 in der Leistung optimal angepaßt werden. Zudem wird die Dynamik erhöht.

Figur 6 zeigt eine weitere vorteilhafte Ausführungsform des Übertragungselementes, bei dem der erste und der zweite Rundungsbereich 41,42 der Übertragungsfläche 40 einen kleineren Abstand aufweisen und die Steigung, mit der die Übertragungsfläche 40 vom ersten zum zweiten Rundungsbereich 41,42 ansteigt, größer ist. Dadurch nimmt das Übersetzungsverhältnis mit der Auslenkung des Aktorkolbens 10 schneller zu als bei der Ausführungsform der Figur 5. Zudem ist die maximale Übersetzung geringer als bei Figur 5, da der Abstand des ersten Rundungsbereiches 41 vom zweiten Rundungsbereich 42 kleiner ist als bei Figur 5. Vorzugsweise kann auch die Steigung der Übertragungsfläche 40 gleich der Steigung der Übertragungsfläche 40 der Ausführungsform der Figur 5 sein.

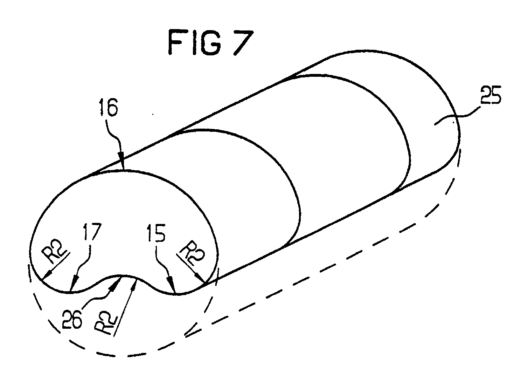

Figur 7 zeigt eine weitere vorteilhafte Ausführungsform eines Übertragungselementes 14, das aus einer zylinderförmigen Stange herausgearbeitet wird. Dabei wird zuerst in die Stange 25 das Profil der Unterseite, die zwischen dem ersten und dem dritte Auflagebereich 15, 17 angeordnet ist, eingebracht. Anschließend wird die profilierte Stange in einzelne Scheiben aufgeteilt. Dadurch werden die Scheiben der Stange, die die Übertragungselemente 14 darstellen, identisch in der Form und insbesondere identisch in dem ersten, dem zweiten und dem dritten Auflagebereich 15, 16, 17 ausgebildet. Eine geringe Variation der Dicke der Übertragungselemente ist für eine genaue und präzise Ansteuerung des Stellgliedes 6 weniger von Bedeutung.

Vorzugsweise weist der erste Auflagebereich 15, der dritte Auflagebereich 17 und der Ausnahmebereich 26, der zwischen dem ersten und dem dritten Auflagebereich 15,17 auf der Unterseite des Übertragungselementes 14 in das Übertragungselement 14 eingebracht ist, den gleichen Radius R2 auf. In einer weiteren Ausführungsform weisen der erste und der dritte Auflagebereich 15, 17 einen ersten, und der Ausnahmebereich 26 einen zweiten, größeren Radius auf.

Das Profil wird vorteilhafter Weise durch Schleifen in die Stange 25 eingebracht. Das Abtrennen der Scheiben erfolgt beispielsweise durch Drahterodieren, Laser- oder Elektronenstrahlschweißen. In einer Weiterbildung wird vor dem Abtrennen der Scheiben in die Stange 25 noch die Kontur, d.h. die Krümmung des zweiten Auflagebereiches 16 oder die Übertragungsfläche 40 eingebracht, wenn diese unterschiedlich zur Krümmung der Stange 25 ausgebildet werden soll.

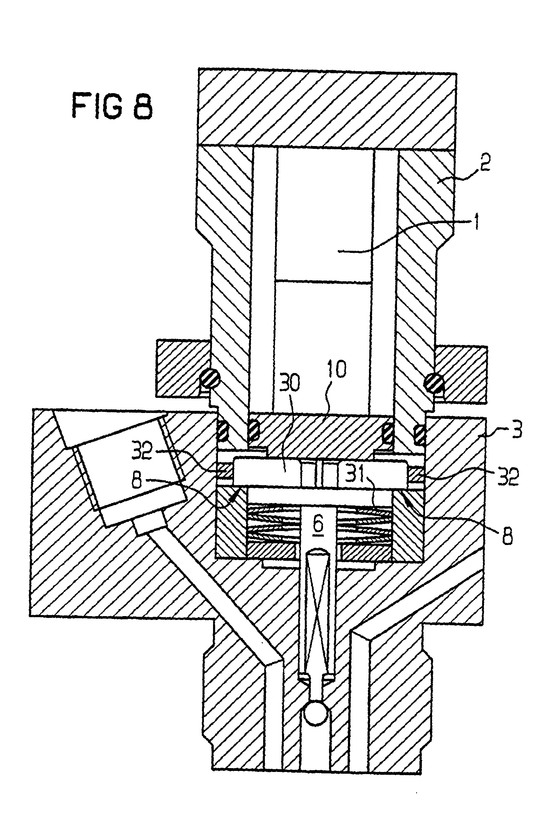

Figur 8 zeigt ein weiteres Einspritzventil, bei dem zwischen dem Aktorkolben 10 und dem Stellglied 6 dritte Übertragungselemente 30 in der Vertiefung 5 vorgesehen sind. Das Stellglied 6 wird durch Blattfedern 31 in Richtung auf die dritten Übertragungselemente 30 und den Aktorkolben 10 vorgespannt.

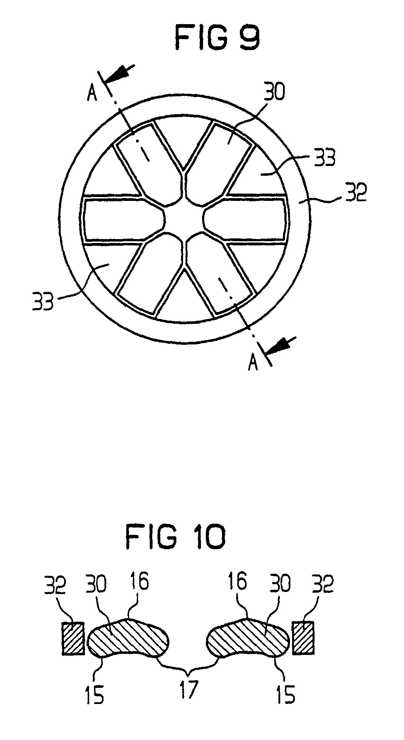

Figur 9 zeigt von oben die dritten Übertragungselemente 30 mit einer Justierscheibe 32. Die Justierscheibe 32 ist als umlaufender Ring ausgebildet, von dem ausgehend Führungsnasen 33 in Richtung Kreismittelpunkt geführt sind. Zwischen zwei Führungsnasen 33 ist jeweils ein drittes Übertragungselement 30 eingelegt.

Das dritte Übertragungselement 30 ist im wesentlichen in Form einer ebenen Platte ausgeführt, die in den Bereichen, in denen der Aktorkolben 10, das Stellglied 6 oder die Auflagefläche 8 anliegt, leicht gekrümmt ist, damit die Reibung reduziert ist.

Figur 10 zeigt im Querschnitt A-A die Anordnung nach Figur 9. Dabei sind im Querschnitt die gerundete erste, zweite und dritte Auflagefläche 15,16,17 des Übertragungselementes 30 zu erkennen.

## Patentansprüche

1. Vorrichtung zum Übertragen einer Auslenkung eines Aktors, mit einem Übertragungselement (14,22), das einen ersten, einen zweiten und einen dritten Auflagebereich(15,16,17) aufweist, wobei der zweite Auflagebereich (16) dem Aktor (1), der dritte Auflagebereich (17) dem Stellglied (6) und der erste Auflagebereich (15) einem Gegenlager (8) zugeordnet ist, wobei sich das Übertragungselement (14,22) bei Einwirken des Aktors (1) mit dem ersten Auflagebereich (15) gegen das Gegenlager (8) abstützt und durch eine Drehbewegung um einen Drehpunkt mit der dritten Auflagefläche (17) das Stellglied (6) bewegt, wobei das Übertragungselement im wesentlichen eine senkrecht zur Übertragungsrichtung angeordnete Zylinderform aufweist und wobei die Auflagebereiche (15,16,17) als Zylinderoberfläche vorzugsweise in der Richtung der Zylinderachse ausgebildet sind, **dadurch gekennzeichnet,**
**daß** eine Führungsscheibe (9,32) mit einer Ausnehmung vorgesehen ist, wobei die Ausnehmung mindestens teilweise der Form des Übertragungselementes (14,22,30) angepaßt ist, daß das Übertragungselement (14,22,30) in die Ausnehmung eingelegt ist und von der Führungsscheibe (9) mindestens teilweise seitlich geführt wird.

2. Vorrichtung nach Anspruch 1, **dadurch gekennzeichnet, daß** die Auflagebereiche (15,16,17) durch eine entsprechende Krümmung der Zylinderoberfläche ausgebildet sind.

3. Vorrichtung nach einem der Ansprüche 1 oder 2, **dadurch gekennzeichnet, daß** die Ausnehmung der Führungsscheibe (9) zur Aufnahme von zwei gegenüberliegenden Übertragungselementen (14,22) ausgebildet ist, die symmetrisch zueinander und auf einer Achse angeordnet sind.

4. Vorrichtung nach Anspruch 1 bis 3, **dadurch gekennzeichnet, daß** das Übertragungselement (14,22) im Querschnitt im wesentlichen eine Dreiecksform aufweist, wobei die Eckbereiche abgerundet sind und als Auflagebereiche (15, 16, 17) dienen.

5. Vorrichtung nach Anspruch 1 bis 4, **dadurch gekennzeichnet, daß** das Übertragungselement (14,22) eine Übertragungsfläche (40) aufweist, die dem Aktor zugeordnet ist, daß die Übertragungsfläche (40) gegenüber dem Aktor (1) geneigt angeordnet ist, so daß sich der zweite Auflagebereich (16) bei der Auslenkung des Aktors (1) entlang der Übertragungsfläche (40) verschiebt.

6. Vorrichtung nach Anspruch 1, **dadurch gekennzeichnet, daß** die Führungsscheibe (32) eine kreisförmige Ausnehmung aufweist, daß die Führungsscheibe Führungskeile (33) aufweist, die auf den Kreismittelpunkt gerichtet sind, daß mehrere Übertragungselemente (30)in die Ausnehmung eingelegt sind, wobei zwischen zwei Übertragungselementen jeweils ein Führungskeil (33) angeordnet ist, so daß die Übertragungselemente (30) sternförmig zum Kreismittelpunkt ausgerichtet sind.

7. Verfahren zum Herstellen eines Übertragungselementes (14,22) für einen Vorrichtung nach Anspruch 1, **dadurch gekennzeichnet, daß** das Übertragungselement (14,22) aus einer zylinderförmigen Stange (25) herausgearbeitet wird, wobei zuerst die Kontur des Übertragungselementes (14,22) in Längsrichtung in die Stange (25) eingebracht wird und anschließend die Stange (25)in Scheiben unterteilt wird, wobei eine Scheibe ein Übertragungselement (14,22) darstellt.

8. Verfahren nach Anspruch 7, **dadurch gekennzeichnet, daß** als Kontur die Form des ersten und des dritten Auflagebereiches (15,17) eingebracht wird, und daß die Zylinderfläche der Stange (25) als zweiter Auflagebereich (16)verwendet wird.

9. Einspritzventil mit einer Vorrichtung nach Anspruch 1.

## Claims

1. System for transferring a deflection of an actuator, with a transfer element (14, 22), which has a first, a second and a third contact area (15, 16, 17), with the second contact area (16) allocated to the actuator (1), the third contact area (17) to the regulator (6) and the first contact area (15) to a thrust bearing (8), whereby the transfer element (14, 22) is braced against the thrust bearing (8) with the first contact area (15) when the actuator (1) is active and moves the regulator (6) through a rotating movement around a point of rotation with the third contact area (17), whereby the transfer element has an essentially cylindrical form perpendicular to the direction of transfer and whereby the contact areas (15, 16, 17) are preferably in the form of cylindrical surfaces in the direction of the cylinder axis, **characterised in that** a guide disk (9, 32) is provided with a recess, whereby the recess is adapted at least partially to the form of the transfer element (14, 22, 30), the transfer element (14, 22, 30) is inserted into the recess and is guided at least partially laterally by the guide disk (9).

2. System according to Claim 1, **characterised in that** the contact areas (15, 16, 17) are formed by a corresponding curve of the cylindrical surface.

3. System according to one of Claims 1 or 2, **characterised in that** the recess of the guide disk (9) is designed to hold two opposite transfer elements (14, 22), which are arranged symmetrically in respect of each other and on an axis.

4. System according to Claims 1 to 3, **characterised in that** the transfer element (14, 22) is essentially triangular in cross-section, with the corners areas rounded and serving as contact areas (15, 16, 17).

5. System according to Claims 1 to 4, **characterised in that** the transfer element (14, 22) has a transfer surface (40), which is allocated to the actuator, the transfer surface (40) is inclined towards the actuator (1) so that the second contact area (16) moves along the transfer surface (40) during deflection of the actuator (1).

6. System according to Claim 1, **characterised in that** the guide disk (32) has a circular recess, the guide disk has guide blocks (33), which are oriented towards the centre point of the circle, a number of transfer elements (30) are inserted in the recess, with a guide block (33) between every two transfer elements, so that the transfer elements (30) are oriented in a star shape around the centre point of the circle.

7. Method for manufacturing a transfer element (14, 22) for a system according to Claim 1, **characterised in that** the transfer element (14, 22) is made out of a cylindrical rod (25), with the contour of the transfer element (14, 22) first being incorporated into the rod (25) in a longitudinal direction, after which the rod (25) is divided up into disks, with one disk representing a transfer element (14, 22).

8. Method according to Claim 7, **characterised in that** the form of the first and third contact areas (15, 17) is incorporated as a contour and that the cylindrical surface of the rod (25) is used as a second contact area (16).

9. Injection valve with a system according to Claim 1.

## Revendications

1. Dispositif pour transmettre une excursion d'un actionneur, comprenant un élément de transmission (14, 22) qui présente une première, une deuxième et une troisième régions de portée (15, 16, 17), la deuxième région de portée (16) étant associée à l'actionneur (1), la troisième région de portée (17) étant associée à l'organe de réglage (6) et la première région de portée (15) étant associée à un appui (8), l'élément de transmission (14, 22) prenant appui contre l'appui (8) lors de l'action de l'actionneur (1) sur la première région de portée (15) et déplaçant l'organe de réglage (6) au moyen de la troisième surface de portée (17) sous l'effet d'un mouvement de rotation autour d'un point de rotation, l'élément de transmission présentant essentiellement une forme cylindrique disposée perpendiculairement à la direction de la transmission, et les régions de portée (15, 16, 17) étant réalisées sous la forme d'une surface cylindrique, de préférence selon la direction de l'axe du cylindre, **caractérisé**
**en ce qu'**une rondelle de guidage (9, 32) est munie d'un évidement, l'évidement étant adapté, au moins partiellement, à la forme de l'élément de transmission (14, 22, 30), en ce que l'élément de transmission (14, 22, 30) est disposé dans l'évidement et guidé latéralement, au moins partiellement, par la rondelle de guidage (9).

2. Dispositif selon la revendication 1, **caractérisé en ce que** les régions de portée (15, 16, 17) sont constituées par une courbure correspondante de la surface du cylindre.

3. Dispositif selon une des revendications 1 ou 2, **caractérisé en ce que** l'évidement de la rondelle de guidage (9) est réalisé pour recevoir deux éléments de transmission opposés (14, 22) qui sont symétriques l'un de l'autre et disposés sur un axe.

4. Dispositif selon la revendication 1 à 3, **caractérisé en ce que** l'élément de transmission (14, 22) présente en coupe transversale sensiblement une forme triangulaire, les régions d'angles étant arrondies et servant de régions de portée (15, 16, 17).

5. Dispositif selon la revendication 1 à 4, **caractérisé en ce que** l'élément de transmission (14, 22) présente une surface de transmission (40) qui est associée à l'actionneur et **en ce que** la surface de transmission (40) est disposée inclinée par rapport à l'actionneur (1), de sorte que la deuxième région de portée (16) se déplace le long de la surface de transmission (40) lors de l'excursion de l'actionneur (1).

6. Dispositif selon la revendication 1, **caractérisé en ce que** la rondelle de guidage (32) présente un évidement circulaire, **en ce que** la rondelle de guidage présente des coins de guidage (33) qui sont dirigés vers le centre du cercle et **en ce que** plusieurs éléments de transmission (30) sont logés dans l'évidement, un coin de guidage (33) se trouvant dans chaque intervalle entre deux éléments de transmission, de sorte que les éléments de transmission (30) sont orientés en étoile par rapport au centre du cercle.

7. Procédé pour fabriquer un élément de transmission (14, 22) pour un dispositif selon la revendication 1, **caractérisé en ce que** l'élément de transmission (14, 22) est taillé dans la masse d'une barre cylindrique (25), le contour de l'élément de transmission (14, 22) étant tout d'abord taillé dans la barre (25) dans la direction longitudinale et la barre (25) étant ensuite divisée en plaques, une plaque représentant un élément de transmission (14, 22).

8. Procédé selon la revendication 7, **caractérisé en ce qu'**on réalise la forme de la première et de la troisième régions de portée (15, 17) par la formation d'un profil et **en ce que** la surface de cylindre de la barre (25) est utilisée comme troisième région de portée (16).

9. Soupape d'injection équipée d'un dispositif selon la revendication 1.
